# EUROPEAN PATENT APPLICATION

(11) **EP 2 478 950 A1**
(43) Date of publication of application: **25.07.2012**
(21) Application number: 11151696.9
(22) Date of filing: 21.01.2011
(51) Int. Cl.: B01D 53/14, B01D 53/62

(54) **Process for sequestration of carbon dioxide**

(71) Applicant: Shell Internationale Research Maatschappij B.V., 2596 HR The Hague (NL)
(72) Inventor: Styles, Michael Thomas, Keyworth Nottingham, MG12 5LT (GB); in 't Veen, Bernardus Cornelis Maria, 1031 HW Amsterdam (NL); Verduyn, Marinus Aris, 1031 HW Amsterdam (NL)
(74) Representative: Matthezing, Robert Maarten

(57) **Abstract**

The present invention provides a process for sequestration of carbon dioxide comprising:
a. providing a silicate hydroxide mineral comprising lizardite; and
b. subjecting the silicate hydroxide mineral comprising lizardite to a heat treatment to obtain an activated mineral;
c. contacting a carbon dioxide-comprising gas stream with an aqueous slurry comprising the activated mineral to obtain an aqueous magnesium bicarbonate solution and/or magnesium carbonate,

wherein the lizardite comprises lizardite having a crystal structure 1T.

## Description

### Field of the invention

The present invention provides a process for sequestration of carbon dioxide.

### Background of the invention

The rising carbon dioxide concentration in the atmosphere due to the increased use of energy derived from fossil fuels potentially may have a large impact on the global climate. Thus there is an increasing interest in measures to reduce the carbon dioxide concentration emissions to the atmosphere.

In order to reduce the carbon dioxide emission a number of carbon dioxide capture and carbon dioxide sequestration processes have been studied. One such process involves the sequestration of carbon dioxide by mineral carbonation (or mineralisation) to form a mineral carbonate.

It is known that carbon dioxide may be sequestered by mineral carbonation. In nature, stable carbonate minerals and silica are formed by a reaction of carbon dioxide with natural silicate minerals:

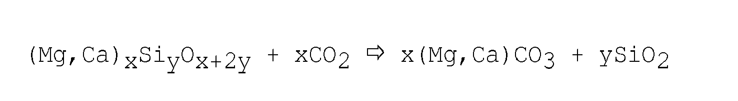

It is known that orthosilicates can be relatively easy reacted with carbon dioxide to form carbonates and can thus suitably be used for carbon dioxide sequestration. Examples of magnesium or calcium orthosilicates suitable for mineral carbonation are olivine, in particular forsterite, and monticellite. Examples of suitable silicates are minerals of the pyroxene and pyroxenoid group, in particular enstatite or wollastonite.

In WO02/085788, for example, is disclosed a process for mineral carbonation of carbon dioxide wherein particles of silicates selected from the group of ortho-, di-, ring, and chain silicates, are dispersed in an aqueous electrolyte solution and reacted with carbon dioxide.

The more abundantly available magnesium or calcium silicate hydroxide minerals, for example serpentine and talc, are sheet silicates and are more difficult to convert into carbonates, i.e. the reaction times for carbonation are much longer. Such sheet silicate hydroxides first need to undergo a heat treatment or activation at elevated temperatures prior to the reaction with carbon dioxide.

Activation of serpentine has for instance been discussed in WO2007060149 and WO2008142017, wherein serpentine is activated using either a hot syngas or a hot flue gas. WO2008142017 also mentions the use of fluidized beds for activating serpentine.

In S.J.Gerdemann et al. (Carbon dioxide sequestration by aqueous mineral carbonation of magnesium silicate, Second Annual Conference on Carbon Sequestration, 5 ―8 May 2003, Alexandria, USA), it is disclosed that heat-treating serpentine for 1 hour at 630°C leads to improved carbonation rates. However, the maximum conversion, i.e. the extent of the subsequent reaction with carbon dioxide, is much lower than the conversion obtained using olivine.

There is a need in the art for further improving the carbonation properties of serpentine-type minerals.

### Summary of the invention

It has now been found that the sequestration of carbon dioxide using a serpentine can be improved by using a lizardite-comprising serpentine that comprises lizardite having a crystal structure 1T.

Accordingly, the present invention provides process for sequestration of carbon dioxide comprising:
a. providing a silicate hydroxide mineral comprising lizardite; and
b. subjecting the silicate hydroxide mineral comprising lizardite to a heat treatment to obtain an activated mineral;
c. contacting a carbon dioxide-comprising gas stream with an aqueous slurry comprising the activated mineral to obtain an aqueous magnesium bicarbonate solution and/or magnesium carbonate,
wherein the lizardite comprises lizardite having a crystal structure 1T.

It has been found that by providing a lizardite-comprising silicate hydroxide mineral, wherein at least part of the lizardite is lizardite having a crystal structure 1T, for sequestrating carbon dioxide results in the extent of magnesium ions extracted from the mineral may be increased.

### Brief description of the drawings.

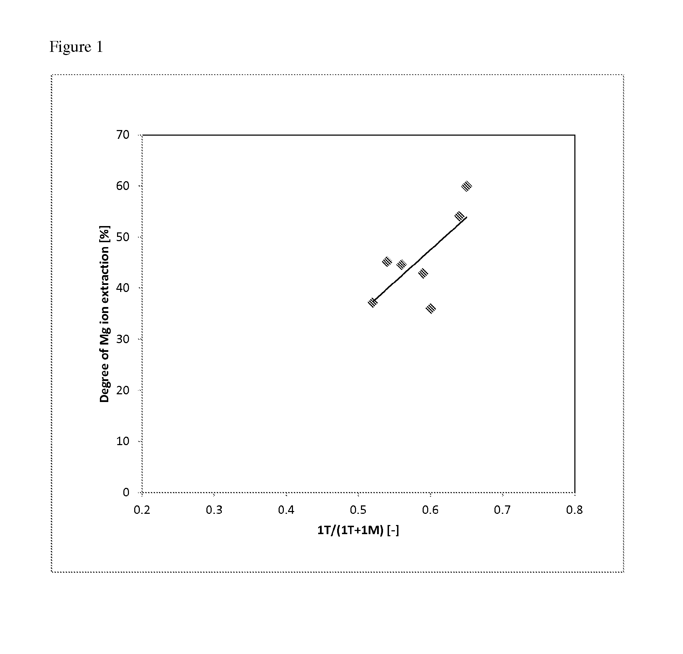

In Figure 1 a graph of the degree of Mg leaching vs. the lizardite 1T content.

### Detailed description of the invention

The present invention provides a process for carbon dioxide sequestration using a silicate hydroxide mineral comprising lizardite. In the present invention, lizardite is chosen such that the lizardite comprises at least lizardite having a crystal structure 1T.

Lizardite is a serpentine-type silicate hydroxide minerals.

Other serpentine-type silicate hydroxide minerals include, but are not limited to: antigorite, amesite, berthierine, chrysotile, népouite and odinite. Although serpentine-type minerals exist that do not comprise magnesium, reference herein to serpentine is to a magnesium-comprising serpentine. Silicate minerals may have different structures. For instance, silicates may be composed of orthosilicate monomers, i.e. the orthosilicate ion Si0₄⁴- which has a tetrahedral structure. Orthosilicate monomers form oligomers by means of O―Si―O bonds at the polygon corners. The Q^{S} notation refers to the connectivity of the silicon atoms. The value of superscript s defines the number of nearest neighbour silicon atoms to a given Si. Orthosilicates, also referred to as nesosilicates, are silicates which are composed of distinct orthosilicate tetrathedra that are not bonded to each other by means of O―Si―O bonds (Q⁰ structure). Other structures include chain silicates, also referred to as inosilicates, which might be single chain (SiO₃²⁻ as unit structure, i.e. a (Q²)ₙ structure) or double chain silicates ((Q³Q²)ₙ structure). Also known are sheet silicate hydroxides, also referred to as phyllosilicates, which have a sheet structure (Q³)ₙ·

Sheet silicate hydroxide minerals, in particular the abundantly available magnesium-comprising silicate hydroxide minerals, such as for example serpentine-type minerals, are more difficult to convert into carbonates. The reaction times for carbonation are much longer than for instance the well known magnesium silicate olivine. It is known that the reaction times for carbonation can be reduced, when, prior to contacting the carbon dioxide, the magnesium-comprising silicate hydroxide minerals, such as serpentine-type minerals, undergo a heat treatment or activation at elevated temperatures prior to the reaction with carbon dioxide. Above a certain temperature, the serpentine mineral is at least partly converted into its corresponding ortho- or chain silicate mineral, silica and water. Additionally, the activation of silicate hydroxide minerals may include a conversion of part of the silicate hydroxide minerals into an amorphous sheet silicate hydroxide mineral derived compound.

It has now been found that next to the choice of silicate mineral, i.e. silicate or silicate hydroxide, and the activation of such materials by heat treatment also the choice of silicate polymorph (also commonly referred to as polytype) influences the carbonation properties of the silicate material. Polymorphism in materials science is the ability of a solid material to exist in more than one form or crystal structure. Reference herein to a particular polymorph is to a particular crystal structure or group of interrelated crystal structures. In particular it has been found that the serpentine polymorph lizardite, also known as orthoantigorite or scyelite, and in more particular lizardite with a crystal structure referred to as 1T has unexpected good carbonation properties.

As mentioned herein above, lizardite is a polymorph of serpentine and is a sheet silicate hydroxide comprising among others magnesium ions. Lizardite exists in several crystal structures including, but not limited to: 1T, 1M, 2H1. Herein below these lizardites are also referred to a 1T―lizardite, 1M―lizardite and 2H1-lizardite. As mentioned herein above, lizardite is a serpentine-type silicate comprising magnesium ions. Serpentine is a naturally occurring magnesium silicate hydroxide mineral and can be found in abundance around the world. Depending on the location of the source of the serpentine, the composition with respect to the serpentine polymorphs may differ significantly and with that the presence, if any, and content of 1T―lizardite.

In the process according to the present invention, the mineral used for sequestrating carbon dioxide is selected such that it comprises lizardite and in particular 1T―lizardite. Without wishing to be bound to any particular theory, it is believed that the sequestration process can be divided into several sub-processes, of which one relates to the extraction, or leaching, of magnesium ions from the mineral. This is an important process as it is believed that the magnesium ions must be extracted from the mineral before they can react with carbon dioxide and water to from magnesium carbonate or the intermediate magnesium bicarbonate.

The extent to which magnesium ions can be extracted from the mineral also determines that efficiency of the sequestration process with respect to the amount of carbon dioxide that can be captured per unit of raw mineral. Reference herein to extraction of magnesium ions is to a conversion of the magnesium-comprising silicate or silicate hydroxide mineral wherein at least part of the magnesium, is removed from the mineral and dissolved in the aqueous medium as magnesium cations. Reference herein to the extent of extraction is to the mole% of magnesium leached from the mineral, based on the total number of moles of magnesium present in the original mineral.

It has now been found that the specific structure of 1T―lizardite allows for a higher extent of magnesium extraction from the mineral, compared to other serpentine polymorph structures, but in particular also compared to crystal structures of lizardite itself, such as 1T-lizardite.

Preferably, the lizardite comprises in the range of from 10 to 100wt% of 1T―lizardite, based on the total weight of the lizardite. More preferably, the lizardite comprises in the range of from 35 to 100wt%, even more preferably of from 50 to 99.9 wt%, still even more preferably 60 to 99.5wt% of 1T―lizardite, based on the total weight of the lizardite. By increasing the fraction of 1T―lizardite in the lizardite, the extent of magnesium ion extraction from the lizardite can be increased.

In step (a) of the process according to the invention, a silicate hydroxide mineral is provided. This mineral may consist or essentially consist of lizardite, however typically it will be provided in the form of a silicate hydroxide mineral comprising lizardite. Preferably, the silicate hydroxide mineral comprises in the range of from 10 to 100wt% of lizardite, more preferably 50 to 100wt% of lizardite, even more preferably 80 to 100wt%, based on the total weight of the silicate hydroxide mineral. The silicate hydroxide mineral may also comprise other silicate hydroxide minerals in particular magnesium-comprising silicates hydroxide minerals, more in particular serpentine-type magnesium-comprising silicates hydroxide minerals, including but not limited to other serpentine polymorphs, chlorite, tremolite. The silicate hydroxide mineral may also comprise minerals other than silicates hydroxide minerals, such as silicate minerals as for instance olivine. Other components comprised in the mineral may include for instance sand, clay, metal oxides, metal hydroxides or one or more metal carbonates, including but not limited to magnesium carbonate, calcium carbonate, chromite, hematite and magnetite.

The lizardite and in particular 1T―lizardite content in a silicate hydroxide mineral can be determined using known techniques in the art. For example XRD (X-ray diffraction) with Rietveld refining using corundum as a tracer can be used to determine the crystal composition and XRF (X-ray fluorescence spectrometry) can be used to determine the elemental composition. Other techniques that allow for the characterisation of structure and the arrangement of atoms in the crystal, such as for instance TEM, may also be used.

As mentioned herein above, silicate hydroxide minerals such as serpentine-type minerals preferably are subjected to a heat treatment prior to being contacted with the carbon dioxide-comprising gas to activate the mineral. Therefore, preferably at least part of the mineral is subjected to a heat treatment prior to step (b) to active at least part of the mineral. The heat treatment or activation of serpentine minerals for mineralisation purposes has been described in for instance EP1951424, herein incorporated by reference. In EP1951424, the activation is performed by contacting the mineral with hot synthesis gas. However, it will be appreciated that also other hot gasses may be used such as for instance hot flue gas.

In step (b) of the process according to the invention, the silicate hydroxide mineral comprising lizardite is subjected to a heat treatment at a temperature in the range of from 550 to 800°C, preferably of from 600 to 700°C. Suitable activation temperatures and activation times are described in WO2010097444, herein incorporated by reference.

Preferably, such an activation is performed in a fluidized bed reactor, in particular in a fluidized bed reactor, wherein a combustible fuel is provided together with a molecular oxygen-comprising gas, for instance natural gas and air, and the combustible gas is combusted inside the fluidized bed. This allows for a better control of the temperature in the fluidized bed and may result in an improved activated mineral quality, i.e. a high possible extent of leaching.

Preferably, the silicate hydroxide mineral is provided to the activation process in the form of particles having an average particle size in the range of from 100 to 750 µm, more preferably 200 to 500 µm. Such particles are especially suitable when the activation is performed in a fluidized bed reactor. Such particles sizes may be conveniently obtained by crushing the raw mineral. Crushing is a relatively simple method that does not require a high energy input. Additionally, there is no direct need to add significant amounts, if any, of liquids, in that sense crushing is comparable to a dry grinding process. The presence of additional components such as liquids during the activation of the mineral is disadvantageous, as these components require additional energy to be heated.

In the process according to the invention, the activated mineral provided in step (b) is contacted in step (c) with a carbon-dioxide gas in the form of an aqueous slurry comprising the mineral. Preferably, the mineral is present in the aqueous slurry in the form of mineral particles, i.e. the carbon dioxide-comprising gas stream is contacted with the aqueous slurry comprising the mineral particles. Preferably, the carbon dioxide-comprising gas stream is contacted with the aqueous slurry comprising the mineral particles at a temperature in the range of from 1 to 100°C, more preferably 10 to 60°C, even more preferably 15 to 50°C and at a carbon dioxide partial pressure in the range of from 0.01 to 35 bara, more preferably 0.05 to 25 bara, even more preferably 0.1 to 10 bara.Preferably, an electrolyte is added to the aqueous slurry in order to improve the formation of the bicarbonate and the extraction of metal ions from the mineral. Preferably, sodium or potassium bicarbonate is provided to the aqueous slurry and/or optionally to the aqueous bicarbonate solution, preferably in an amount as to obtain a sodium or potassium bicarbonate concentration of 1 mol or less per litre of the aqueous medium, i.e. not including solids.

The silicate hydroxide mineral particles may have any suitable size, preferably the particles have an average particle size in the range of from 0.1 µm to 5 cm, more preferably 0.5 to 500 µm. Reference herein to average diameter is to the volume medium diameter D(v,0.5), meaning that 50 volume% of the particles have an equivalent spherical diameter that is smaller than the average diameter and 50 volume% of the particles have an equivalent spherical diameter that is greater than the average diameter. The equivalent spherical diameter is the diameter calculated from volume determinations, e.g. by laser diffraction measurements.

In order to reach optimal extraction of the magnesium cations from the mineral particles it is preferred that the mineral particles have an average particle size of 50 µm or less, more preferably 15 µm or less, even more preferably in the range of from 15 to 0.5 µm.

The preferred particle size may be obtained by any suitable process for reducing the size of particles. Preferably, the process for reducing the particle size is a mechanical process, further referred to as grinding. Examples of grinding processes are for instance dry or wet grinding. Reference herein to wet grinding is to grinding in the presence of a suitable grinding fluid. Dry grinding of mineral to obtain particles of such small dimensions, however, is difficult, requires significantly more power and may require additional safety measure due to the formation of dust particles. Therefore, preferably, at least part of the mineral grinding is performed by wet grinding, preferably using an aqueous medium as grinding fluid.

For instance, the mineral may by dry grinded to an average particle size of approximately 500 µm and subsequently, after addition of the aqueous medium, wet grinded to the desired final average particle diameter. However, it is also possible to perform the complete grinding in the presence of the aqueous medium.

It is particularly advantageous and therefore preferred to combine the treatment to reduce the average particle size of the mineral particles with step (c) of the process according to the invention. More preferably, during step (c) the mineral particles are treated to reduce the average particle size to an average particle size in the range of from 0.1 to 50 µm, even more preferably of from 0.5 to 15 µm. Typically, the treatment for reducing the average particle size will be wet grinding as the mineral is provided to step (c) in the form of an aqueous slurry. When carbon dioxide is contacted with the aqueous medium and the mineral during grinding, the extent of magnesium cation extraction from the mineral is increased and consequently the amount of carbon dioxide that can be captured per unit of raw mineral is increased.

During step (c), the aqueous slurry of mineral particles is preferably contacted with carbon dioxide-comprising gas for in the range of from 1 to 60 minutes, preferably 10 to 30 minutes. Preferably, at least 35 mol%, more preferably at least 40 mol% of magnesium cations present in the mineral is extracted and dissolved in the aqueous medium to form an aqueous bicarbonate solution or precipitated as magnesium carbonate, based on the total amount of magnesium cations present in the mineral prior to step (c).

During contact with the aqueous slurry at least part of the carbon dioxide comprised in the carbon dioxide-comprising gas is transferred to the aqueous phase, either in the form of bicarbonate or as dissolved carbon dioxide and a carbon dioxide-depleted gas is obtained. It will be appreciated that in case the carbon dioxide-comprising gas was pure CO₂ when contacted with the aqueous slurry, the carbon dioxide-depleted gas still comprises pure carbon dioxide, however part of the carbon dioxide originally comprised carbon dioxide-comprising gas has been removed.

In addition, at least part of the mineral is converted to magnesium bicarbonate, typically an aqueous solution of magnesium bicarbonate. Precipitated magnesium carbonate and a silica phase are typically also formed.

As a result at least part of the carbon dioxide, which was present in the carbon dioxide-comprising gas is sequestrated in the form of magnesium bicarbonate and/or magnesium carbonate.

A particular suitable way of performing step (c) was described in WO2010097451, which is hereby incorporated by reference.

The aqueous slurry, which is contacted with the carbon dioxide-comprising gas in step (c) of the process according to the invention, may be any suitable aqueous slurry comprising an aqueous medium, preferably water, and mineral particles.

The aqueous slurry suitably contains up to 60 wt% of solid material, i.e. mineral, based on the total weight of the aqueous slurry, preferably 10 to 50 wt%. The aqueous slurry may, for example, be formed by mixing silicate hydroxide particles with the aqueous medium.

The carbon dioxide-comprising gas may be pure carbon dioxide or a mixture of carbon dioxide with one or more other gases. Preferably, the carbon dioxide-comprising gas comprises a carbon dioxide partial pressure of in the range of from 0.01 to 1 bar , preferably 0.05 to 0.5 bar, more preferably 0.1 to 0.2 bar at Standard Temperature and Pressure conditions of 0 °C and 1 bar. Examples of suitable carbon dioxide-comprising gases include flue gas, synthesis gas or the effluent of a water-gas-shift process. Reference herein to synthesis gas is to a gas comprising at least hydrogen, carbon monoxide and optionally carbon dioxide. The carbon monoxide content of synthesis gas may be reduced by a water-gas-shift process wherein carbon monoxide is converted with water to hydrogen and carbon dioxide.

### Examples:

The invention is further illustrated by means of the following non-limiting example.

### Example 1

The extent to which magnesium ions can be extracted from a mineral sample was determined using several serpentine samples comprising different 1T over IM crystal structure ratios.

The mineral samples were subjected to a magnesium extraction process, wherein 100 ml of an aqueous slurry comprising 2 %wt, based on total slurry, of solid mineral particles and 0.1 mol/l NaHCO₃ was provided. The slurry was stirred at room temperature and ambient pressure in flask. Pure carbon dioxide gas was bubbled through the slurry for three hours. Every hour samples were taken to determine the concentration of dissolved magnesium ions and the presence of precipitated magnesium carbonate. The concentration of dissolved magnesium ions was analyzed with ion chromatography (IC) and the presence of precipitated magnesium carbonate was determined using a Thermogravimetric analysis-Mass spectrometry (TGA-MS).

The results are shown in Figure 1. It will be clear that although some scattering is observed, there is a clear trend toward a higher extraction of magnesium ions with increasing 1T content.

## Claims

1. A process for sequestration of carbon dioxide comprising:
a. providing a silicate hydroxide mineral comprising lizardite; and
b. subjecting the silicate hydroxide mineral comprising lizardite to a heat treatment to obtain an activated mineral;
c. contacting a carbon dioxide-comprising gas stream with an aqueous slurry comprising the activated mineral to obtain an aqueous magnesium bicarbonate solution and/or magnesium carbonate,
wherein the lizardite comprises lizardite having a crystal structure 1T.

2. A process according to claim 1, wherein the lizardite comprises in the range of from 10 to 100wt% of lizardite having a crystal structure 1T, based on the total weight of lizardite.

3. A process according to claim 1 or 2, wherein the silicate hydroxide mineral comprises in the range of from 50 to 100wt% of lizardite, based on the total weight of silicate hydroxide mineral.

4. A process according to any one of the preceding claims, wherein in step (b) the silicate hydroxide mineral comprising lizardite is subjected to a heat treatment at a temperature in the range of from 550 to 800°C, preferably of from 600 to 700°C.

5. A process according to any one of the preceding claims, wherein in step (a) the carbon dioxide-comprising gas stream is contacted with the aqueous slurry at a temperature in the range of from 1 to 100°C, preferably 10 to 60°C, more preferably of from 15 to 50°C and a pressure in the range of from 1 to 35 bara, preferably 1.1 to 25 bara, more preferably of from 1.5 to 10 bara.

6. A process according to any of the preceding claims, wherein the aqueous slurry of step (b) is prepared by addition of water to mineral particles having a particle size in the range of from 0.1µm to 5cm, more preferably of from 0.5 to 500µm, even more preferably of from 0.5 to 15µm.

7. A process according to any one of the preceding claims, wherein the carbon dioxide-comprising gas comprises a carbon dioxide partial pressure of in the range of from 0.01 to 1 bar , preferably 0.05 to 0.5 bar, more preferably 0.1 to 0.2 bar at Standard Temperature and Pressure conditions of 0 °C and 1 bar.
